# EUROPEAN PATENT SPECIFICATION

(11) **EP 1 613 143 B1**
(45) Date of publication and mention of the grant of the patent: **08.09.2010**
(21) Application number: 04724498.3
(22) Date of filing: 31.03.2004
(51) Int. Cl.: A01D 34/00, A01D 34/63, A01D 34/67, A01D 34/82, F16F 7/00

(54) **ASSEMBLY TO REDUCE THE TRANSMISSION OF VIBRATION TO THE OPERATOR OF A LAWN MOWER**
ANORDNUNG ZUR REDUZIERUNG DER ÜBERTRAGUNG VON SCHWINGUNGEN AUF DEN BEDIENER EINES RASENMÄHERS
ENSEMBLE POUR REDUIRE LA TRANSMISSION DES VIBRATIONS A L'OPERATEUR D'UNE TONDEUSE

(30) Priority: 31.03.2003 AU 2003901514; 01.08.2003 AU 2003904059
(43) Date of publication of application: 11.01.2006
(73) Proprietor: Victa Lawncare Pty. Ltd., Botany, NSW 2019 (AU)
(72) Inventor: WILLIAMS, Peter, Balmain, NSW 2041 (AU); WINDWOOD, Philip, Balmain, NSW 2041 (AU); SEIDEL, David, Paul, Minto Heights, NSW 2566 (AU); CROAKER, Peter, Moorebank, NSW 2170 (AU); DOYLE, Patrick, Anthony, Moorebank, NSW 2170 (AU); TONITTO, Paul, John, Moorebank, NSW 2170 (AU)
(74) Representative: Oxley, Robin John George
(86) International application number: PCT/AU2004/000412
(87) International publication number: WO 2004/086850

(56) References cited:
- EP-A- 0 446 681
- EP-A- 1 075 785
- EP-A1- 1 075 785
- US-A- 2 900 660
- US-A- 4 015 407
- US-A- 4 527 380
- US-A- 4 926 947
- US-A1- 2005 279 066

## Description

### Technical Field

The present invention relates to devices to inhibit the transmission of vibrations to a handle of a hand directed implement, and more particularly but not exclusively to vibration dampening devices employed in lawn mowers.

### Background of the Invention

Typically, walk behind lawn mowers have a handle directly attached to the base plate of the lawn mower. Accordingly, vibrations from the base plate are transmitted directly to the handle and therefore ultimately to the operator. This has a number of disadvantages including operator discomfort and possible injury to the operator.

The above problems have been addressed in the past by coupling the lower end of the handle to the base plate via a resilient pad (rubber block) and/or by mounting the engine on resilient mountings. However, these attempts to overcome the above problems have not been very successful.

US 4926947 describes a known turf aerating apparatus with a resilient handle mount. US 2900660 describes a known lawn mower handle according to the preamble of claim 1.

### Object of the Invention

It is the object of the present invention to overcome or substantially ameliorate at least one of the above problems.

### Summary of the Invention

There is firstly disclosed herein a handle assembly to be gripped and used by an operator to direct an implement to move over a ground surface in a predetermined direction, the implement having a base upon which there is mounted an engine, said assembly including:
a lower handle portion to be attached to the base;
an upper handle portion movably attached to the lower handle portion and extending upwardly therefrom at a predetermined acute angle relative to the horizontal;
guides operatively associated with the lower handle portion and upper handle portion to retain the upper handle portion to move relative to the lower handle portion along a generally linear path extending at said angle;
**characterised in that** said handle assembly further includes:
   a resilient part urging said upper handle portion to a predetermined position relative to said lower handle portion and inhibiting the transmission of vibrations from said lower handle portion to said upper handle portion.

Preferably, said guides include a slide assembly providing a pair of telescopically associated guide rails being attached to the lower handle portion and upper handle portion to provide for movement of the upper handle portion relative to the lower handle portion along said generally linear path.

Preferably, said resilient part is at least one spring.

Preferably, said resilient part includes two springs, the two springs being attached to the upper handle portion and lower handle portion to urge the upper handle portion to said predetermined position and to inhibit said transmissions, with the springs acting in opposite directions.

Preferably, the handle assembly further includes a pivot assembly attached to the upper handle portion to provide for pivoting movement of the upper handle portion about a pivot axis transverse relative to the upper handle portion, said axis also being generally parallel to said ground surface, said pivot assembly including a resilient part urging said upper handle portion to a predetermined angular position with respect to said axis and to inhibit the transmission of vibration to the upper handle portion.

Preferably, said pivot assembly is also attached to the lower handle portion.

Preferably, said guides are a guide assembly attaching the upper handle portion to the lower handle portion.

Preferably, the handle assembly further includes a pivot assembly attached to the lower handle portion for attachment to the lower handle portion to the base to provide for pivoting movement of the upper handle portion about a pivot axis transverse relative to the upper handle portion, said axis also being generally parallel to the ground surface, said pivot assembly including a resilient part urging said lower handle portion to a predetermined angular position with respect to said axis and to inhibit vibration of the base being transmitted to the upper handle portion.

Preferably, said guide assembly includes a plurality of rollers directing the upper handle portion to move along said path.

Preferably, the handle assembly further includes a plate attached to the lower handle portion and upon which the rollers are mounted.

Preferably, said upper handle portion slidably engages said plate and is engaged by said rollers to be directed along said path.

Preferably, the handle assembly further includes resilient pads attaching the guide assembly to the lower handle portion to absorb lateral vibration from the base to the upper handle portion.

Preferably, the handle assembly further includes a handle mounting to be attached to the base, and a pivot assembly attaching the lower handle portion to the mounting for pivoting movement about an axis generally transverse relative to the upper handle portion, the pivot assembly including a resilient part urging the upper handle portion to a predetermined angular position with respect to said axis urging the upper handle portion to a predetermined angular position with respect to said axis and to inhibit vibration of the base being transmitted to the upper handle portion.

Preferably, the lower handle portion is attached to the pivot assembly for angular movement about a further pivot axis, said further pivot axis being generally normal to the pivot axis of said pivot assembly said part.

Preferably, the handle assembly further includes a resilient pad limiting movement of the upper handle portion about said further axis.

Preferably, the handle assembly further includes a transverse member attached to the lower handle portion and attaching the lower handle portion to said pivot assembly.

### Brief Description of the Drawings

A preferred form of the present invention will now be described by way of example with reference to the accompanying drawings wherein:
Figure 1 is a schematic perspective view of portion of a lawn mower;
Figure 2 is a schematic perspective view of a further portion of the lawn mower of Figure 1;
Figure 3 is a schematic side elevation of a resilient pivot assembly employed in the lawn mower of Figures 1 and 2;
Figure 4 is a schematic front elevation of the pivot assembly of Figure 3;
Figure 5 is a schematic parts exploded perspective view of the handle of the lawn mower of Figures 1 and 2;
Figure 6 is a schematic parts exploded perspective view of an alternative construction of the pivot assembly of Figures 3 and 4;
Figure 7 is a schematic sectioned side elevation of an engine mounting employed in the lawn mower of Figures 1 and 2;
Figure 8 is a schematic front elevation of a mounting member employed in the engine mounting of Figure 7;
Figure 9 is a schematic perspective view of the mounting member of Figure 8;
Figure 10 is a schematic perspective view of a shroud employed in the engine mounting of Figure 7;
Figure 11 is a schematic perspective view of a resilient member employed in the engine mounting of Figure 7;
Figure 12 is a schematic perspective view of a modification of the handle of Figure 5;
Figure 13 is a schematic perspective view of a roller employed in the handle of Figure 12;
Figure 14 is a schematic sectioned side elevation of the handle of Figure 12 sectioned along the line A-A;
Figure 15 is a schematic perspective view of a lawn mower;
Figure 16 is a schematic elevation of a handle portion of the lawn mower of Figure 15;
Figure 17 is a schematic side elevation of the handle portion of Figure 16;
Figure 18 is a schematic front elevation of an upper handle portion of the lawn mower of Figure 16; and
Figure 19 is a schematic parts sectioned side elevation of the handle portion of Figure 18.

### Detailed Description of the Preferred Embodiment

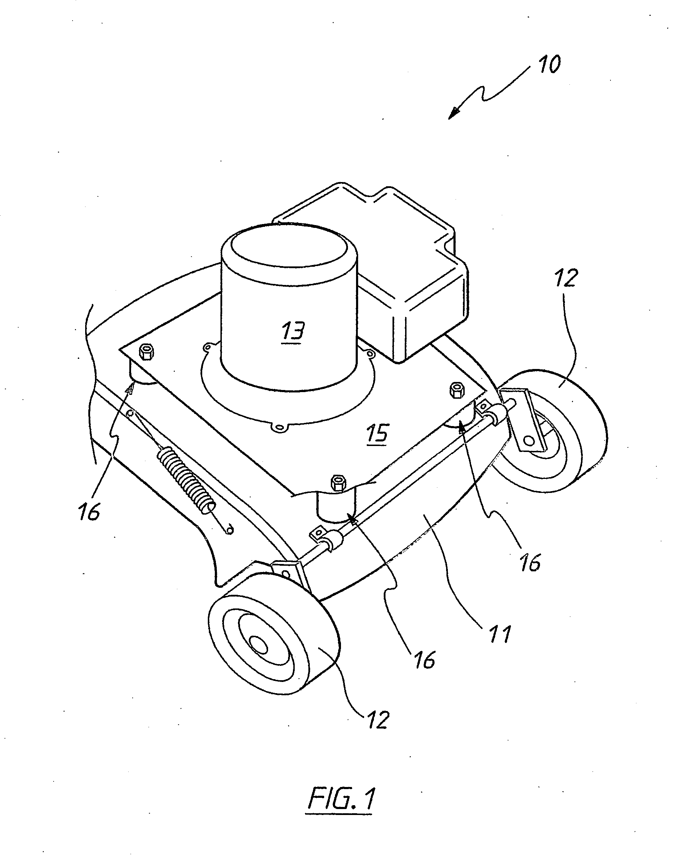

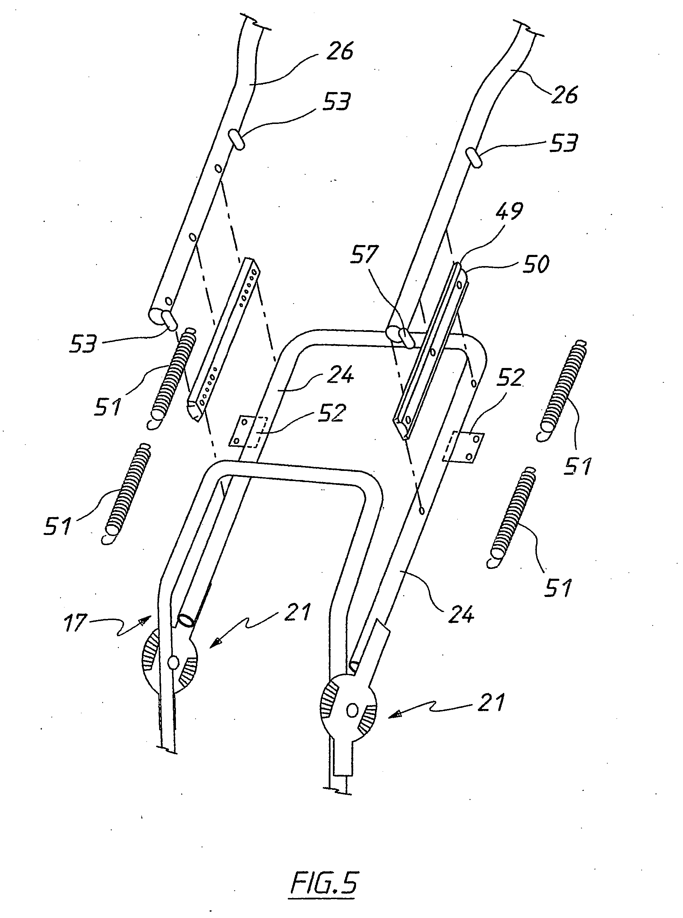

In Figures 1 to 5 of the accompanying drawings there is schematically depicted a walk behind lawn mower 10. The lawn mower 10 has a base plate 11 supported by four wheels 12 (only two illustrated) so that the lawn mower 10 may move over a ground surface. The lawn mower 10 has an engine 13 that drives a disc (not illustrated) having a plurality of blades which cut the lawn over which the lawn mower 10 is passing. Extending upwardly at an acute angle from the base plate 11 is a handle assembly 14. The handle assembly 14 extends upwardly at an acute angle relative to the horizontal from the base plate 11.

In conventional lawn mowers typically the engine would be directly mounted on the base plate 11. This generates essentially two streams of vibration that are delivered to the handle assembly 14. First of all there is the vibrations generated by the engine 13 and rotatably driven above discussed disk and cutting blades. Typically, these vibrations were directly passed to the handle assembly 14. However, it has been further appreciated that additional vibrations emanate from base plate 11 due to reaction of the wheels 12 against the ground surface. This further stream of vibrations is typically again delivered directly to the handle assembly 14.

The lawn mower 10 of this preferred embodiment has the engine 13 directly fixed to a mounting plate 15. The mounting plate 15 is then attached to the base plate 11 by four resilient engine mounting assemblies 16. Each assembly 16 is located adjacent a respective one of the corners of the plate 15. Typically, the plate 15 would be of a square or rectangular configuration. As the assemblies 16 are located between the base plate 11 and mounting plate 15, the mounting plate 15 is therefore located above the base plate 11.

The handle assembly 14 includes a handle mounting 17 of "U-shaped" configuration so as to have a pair of arms 18 directly attached to the base plate 11 and extending upwardly therefrom to a transverse portion 19. Attached to the handle mounting 17 is a lower handle portion 20 by a pair of pivot assemblies 21. Attached to the lower handle portion 20 is an upper handle portion 22. The upper handle portion 22 is attached to the lower portion 20 by means of slide assemblies 23. The lower handle portion 20 includes a pair of elongated members 24 that are generally parallel and coextensive and joined at their upper extremities by means of a transverse portion 25. The upper handle portion 22 includes a pair of elongated members 26 joined at their upper portions by a transverse portion 27. The members 26 are generally parallel and coextensive. The members 24 are transversely spaced as other members 26 transversely spaced.

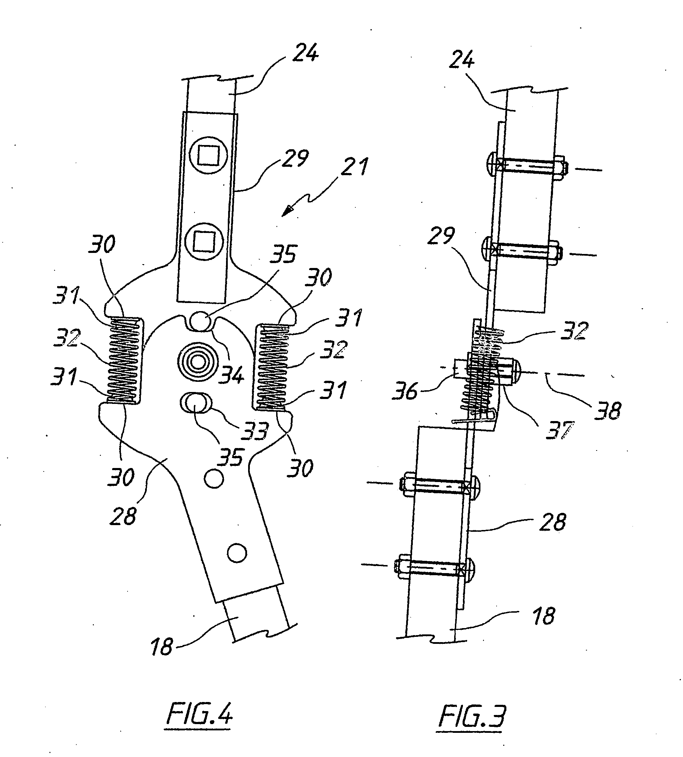

Each pivot assembly 21 is of a resilient nature and includes a lower part 28 attached to the handle mounting 17, and an upper part 29 attached to an associated one of the members 24. Each part 28 and 29 includes an abutment surface 30 from which there extends an associated projection 31. Located on opposing projections 31 and extending therebetween are springs 32. The springs 32 are in compression and urge the parts 28 and 29 to the position illustrated in Figure 4. That is, with the parts 28 and 29 attached to the members 18 and 24 so that the member 18 extends at an acute angle relative to the longitudinal axis of the member 24.

To limit relative angular displacement between the parts 28 and 29, the part 28 is provided with an elongated slot 33 and a recess 34 into which pins 35 (fixed to the part 29) project. The pins 35 engage the extremities of the slot 33 and recess 34 to limit angular displacement of the part 29 relative to the part 28.

The parts 28 and 29 are joined by means of a threaded fastener 36 engaging within a nut 37. The threaded fasteners 36 provide an axis 38 about which the parts 28 and 29 may be relatively angularly displaced. In this respect it should be appreciated that the pivot assemblies 21 on opposite sides of the mower 10 have the common pivot axis 38.

In operation of the above described pivot assembly 21, vibration generated by vertical movement of the base plate 11 is inhibited from being transferred to the handle assembly 14 by relative displacement between the parts 28 and 29 by resilient deformation of the springs 32. The springs 32 are compressed by relative movement between the surfaces 30 between which the springs 32 are compressed.

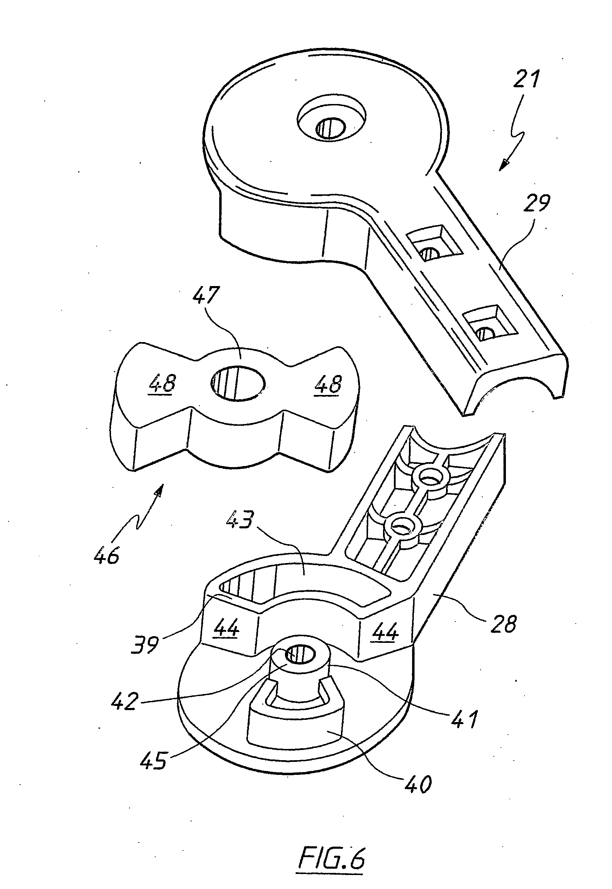

A modification of the pivot assembly 21 is shown in Figure 6. In Figure 6 the pivot assembly 21 includes parts 28 and 29 that are moulded from plastics material and are substantially identical. Each part 28 and 29 includes a first segment 39 and a second segment 40. The segments 39 and 40 are adjacent a cylindrical flange 41 having a passage 42 through which the threaded fastener 36 would pass to provide the pivot axis 38. The segment 40 of the part 28 would be located within an internal cavity 43 of the segment 39 of the part 29. Conversely, the segment 40 of the part 29 would be located within the cavity 43 of the segment 39 of the part 28.

The segments 39 have end faces 44 and co-operate with the flange 41 to provide an annular cavity 45. Located between opposing faces 44 of the parts 28 and 29 and being located in the annular cavity 45 is a resilient element 46. The resilient element 46 has an annular portion 47 surrounding the flange 41, and arms 48 that are located between opposing faces 44. Angular displacement between the parts 28 and 29 causes resilient compression of the arms 48. This resilient deformation urges the parts 28 and 29 to the position shown in Figure 4. This resilient deformation also inhibits the transfer of vibration from the base plate 11 to the handle assembly 14.

The segments 40 being located within their respective cavities 43 also limit angular displacement of the parts 28 and 29.

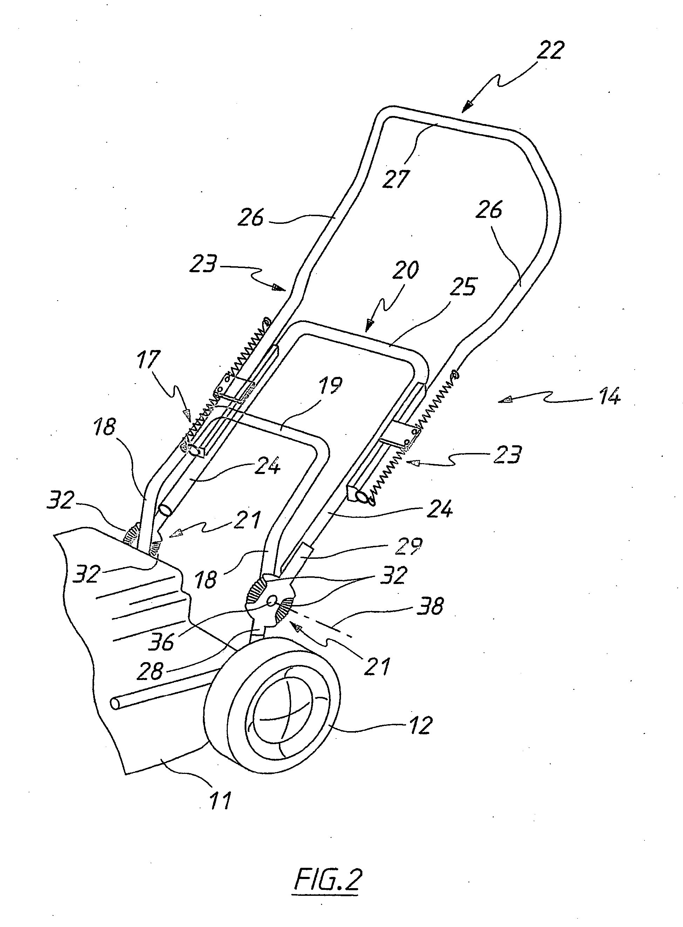

As mentioned previously, the upper handle portion 22 is attached to the lower handle portion 20 by means of a pair of slide assemblies 23. Each slide assembly 23 includes a pair of telescopic guide rails 49 and 50, the rails 49 each being attached to a respective one of the members 26 while the rails 50 are each attached to a respective one of the members 24. The rails 49 and 50 slide relative to each other linearly thereby provide for linear relative movement between the upper handle portion 22 and the lower handle portion 20. However, springs 51 attached to the members 26 and flanges 52 (attached to the members 24) urge the upper handle portion 22 to the position shown in Figure 2, that is a predetermined position. More particularly, the springs 51 are also attached to projections 53 of the members 26, which projections also limit movement of the rails 50 by engagement therewith. The linear movement is at an acute angle relative to the lateral and the horizontal. That is the movement is in the general direction of extension of the handle assembly 14.

It should be appreciated that in the above described preferred embodiments, the handle assembly 14 may be provided with one or more pivot assemblies 21 and/or one or more slide assemblies 23. Preferably, each handle assembly 14 has pivot assemblies 21 and a pair of slide assemblies 23 to aid in inhibiting the transmission of vibrations in the X and Z directions, to the upper handle portion 22. The Z direction is the normal direction (horizontal) of movement of the mower. The X direction is the vertical direction. The vibration in the Y direction (transverse) is relatively small, with the transmission thereof inhibited by the inherent resilience in the handle assembly 14.

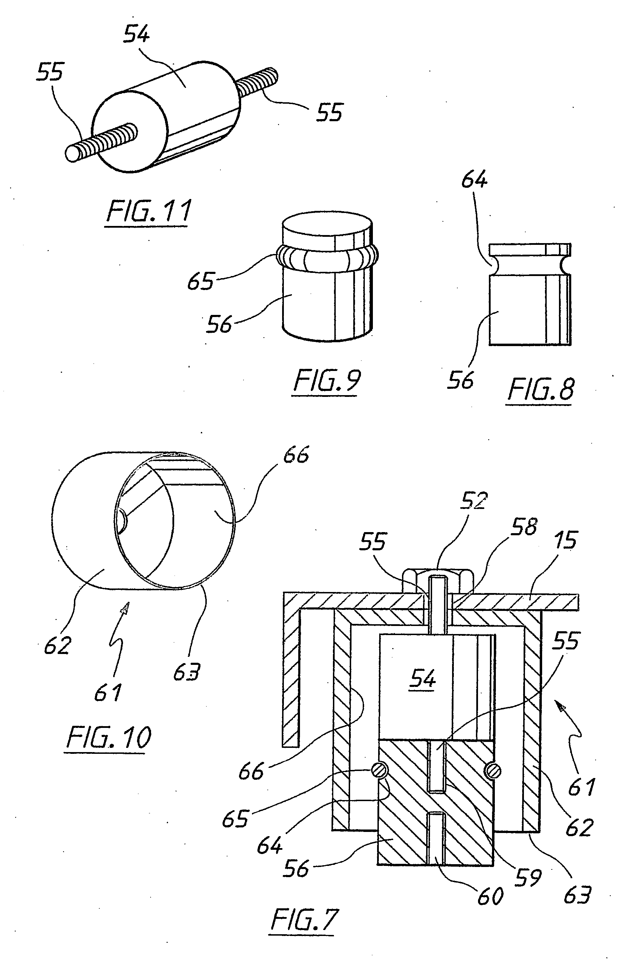

In Figures 7 to 10 there is schematically depicted a one of the mounting assembly 16 (in cross-section) as well as the parts thereof. Each mounting assembly 16 includes a resilient member 54 that has secured within it and projecting from the ends thereof a pair of threaded members 55. One of the threaded members 55 is threadably received within a mounting member 56 so that the mounting member 56 is secured to the resilient member 54. The other threaded member 55 projects upwardly through the mounting plate 15 and is secured thereto by means of a nut 57. The threaded member 55 projects through an aperture 58 in the plate 15.

The mounting member 56 has a threaded passage 59 that receives the threaded member 55, while a further threaded passage 60 provides for engagement with a bolt to secure the member 56 to the base plate 11.

Surrounding the members 54 and 56 is a generally cylindrical shroud 61 having a generally cylindrical flange 62 with a lower generally circular extremity 63. The extremity 63 is spaced from an upper surface of the base plate 11 by a predetermined distance. Accordingly, travel of the plate 15 toward the plate 11 is limited. Further in this regard, the member 56 is provided with an annular groove 64 within which there is located a resilient "O" ring 65. The "O" ring 65 abuts the internal surface 66 of the flange 62 to limit lateral relative movement between the plate 15 and the plate 11.

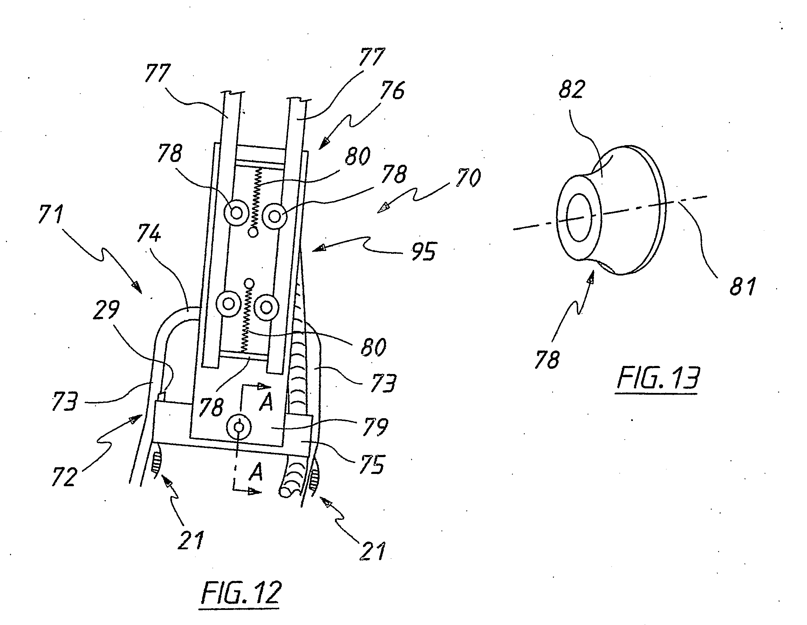

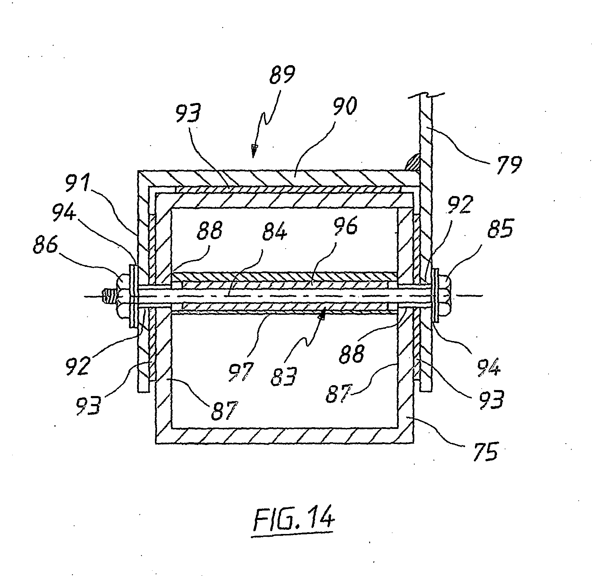

In Figures 12 to 14 there is schematically depicted a modified handle assembly 70. The handle assembly 70 includes a lower handle portion 71 attached to the lawn mower base plate 11 (Figure 2), which lower handle portion 71 includes a tubular member 72 of "U" configuration so as to have a pair of generally parallel arms 73 joined by a transverse portion 74. The lower portion 71 also includes a plate 75 extending between the upper parts 29 of the pivot assemblies 21 (Figures 3 and 4) and is fixed thereto. The lower handle portion also includes a plate 79 having a guide assembly 95. The pivot assemblies 21 attach the plate 75 to the base plate 11.

An upper handle portion 76 is attached to the lower handle portions 71 (by plate 79 and assembly 95) so as to be movable relative thereto along a generally linear path inclined at an acute angle to the horizontal. More particularly, the upper handle portion 76 includes a pair of generally parallel co-extensive tubular members 77 joined by cross members 78. The members 77 are engaged by rollers 78 of the assembly 95 that provide for the linear movement of the upper handle portion 76.

Also attached to the plate 79 are springs 80 that are attached to members 78 so that the upper handle portion 76 is urged to a predetermined position relative to the plate 79.

Each roller 78 is rotatable about an axis 81 that extends generally normal to the direction of movement of the upper handle portion 76. Each roller 78 has an arcuate surface 82 that engages a respective one of the members 77. Typically, the member 77 would be circular in transverse cross-section. The members 77 slide on the plate 79 and has rolling contact with the rollers 78.

The plate 79 is attached to the plate 75 by means of a bolt 83. The bolt 83 has a threaded shaft 84 and a head 85. Threadably engaged with the shaft 84 is a nut 86. The shaft 84 extends through the side walls 87 of the plate 75 via passages 88 formed therein. The plate 79 has extending from it a bracket 89 including an upper section 90 and side section 91. The bolt shaft 84 passes through the plate 79 and side section 91 via passages 92.

Located between the plate 75, and plate 79 and bracket 89 are resilient pads 93. Located between the head 85 and plate 79, and the nut 86 and side section 91 are washers 94. The shaft 84 is resiliently supported in the resilient sleeve 96 located in tubular member 97.

The above described handle assembly 70 with its guide assembly 95 provides for the absorption of vibration in the direction of the extension of the handle members 77. The resilient pads 93 and resilient washers 94 aid in absorbing lateral vibration.

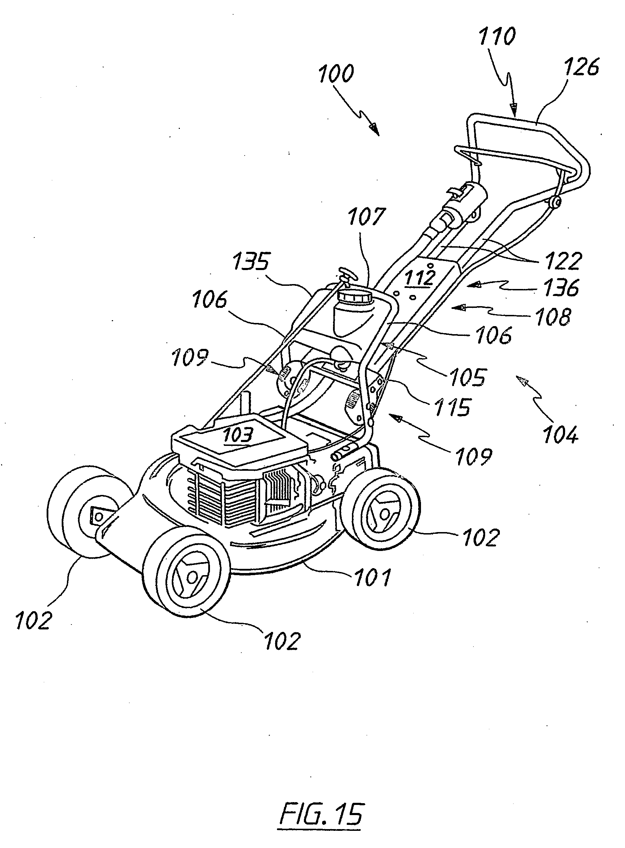

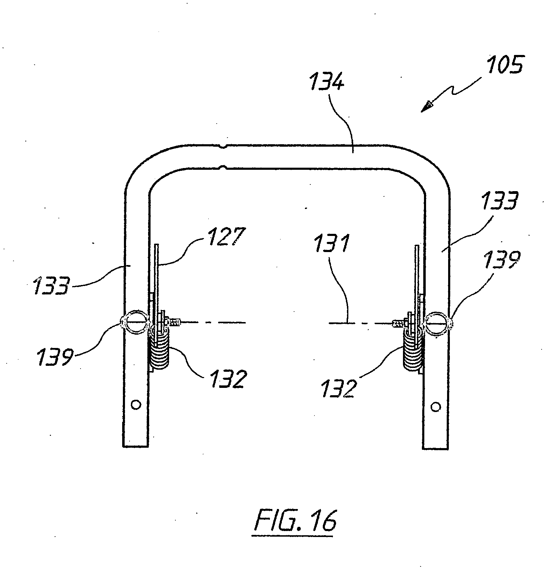

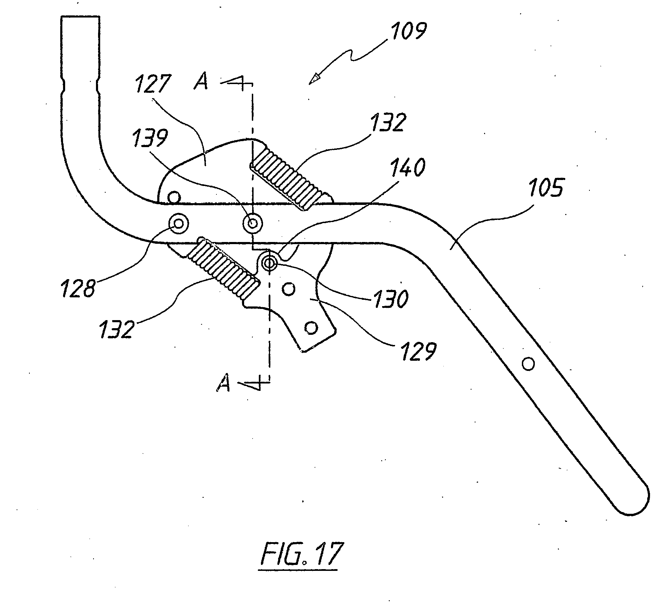

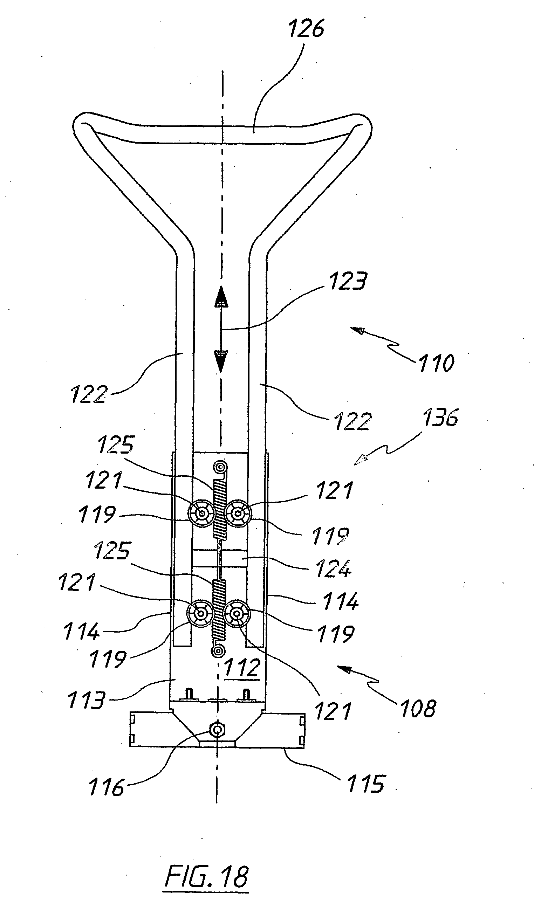

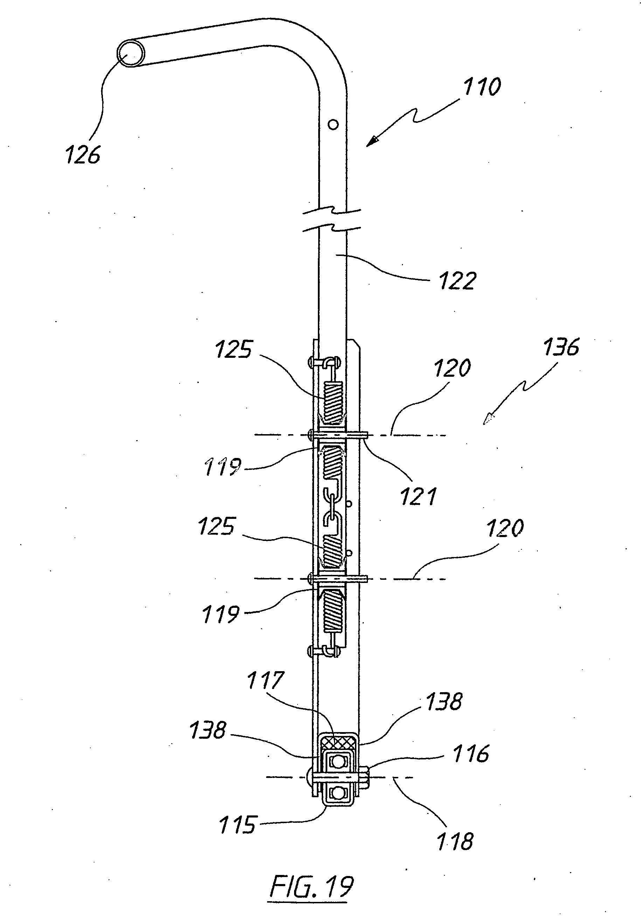

In Figure 15 to 19 of the accompanying drawings there is schematically depicted a walk behind lawn mower 100. The mower 100 has a base plate 101 supported by four wheels 102 so that the lawn mower 100 may move over a ground surface. The lawn mower 100 has an engine 103 that drives a disc (not illustrated) having a plurality of blades that cut the lawn over which the lawn mower 10 is passing. Extending upwardly at an acute angle from the base plate 101 is a handle assembly 104.

The handle assembly 104 includes a handle mounting 105 of "U-shaped" configuration so as to have a pair of arms 106 directly attached to the base plate 101 and extending upwardly therefrom to a transverse portion 107. Attached to the handle mounting 105 is a lower handle portion 108 by a pair of pivot assemblies 109 attached to the lower handle portion 108 is an upper handle portion 110. The lower handle portion 108 includes a lower handle member 112 that is formed from sheet metal so as to have a first planar portion 113 from which there extends a pair of elongated members or flanges 114.

The lower handle portion 108 is attached to a transverse member 115 extending between the pivot assemblies 109. The member 112 is attached to the member 115 by a nut 137 and bolt 116. The lower end of the member 112 is of a "U" shaped configuration as to have spaced flanges 138 through which the bolt 116 passes, as well as the member 115. Resting on the upper surface of member 115 is a resilient strip or pad 117 that is engaged by the lower handle member 112. In use of the handle assembly 104, the handle assembly 104 can pivot about an axis 118 provided by the bolt 116, which pivoting movement is limited by engagement of the member 112 with the pad 117. Typically, the pad 117 would be plastics or rubber. Accordingly, limited movement of the handle assembly 104 is permitted about the axis 118 with vibrations about the axis 118 being at least partly absorbed by engagement of the member 112 with the pad 117.

Mounted on the member 112 are four rollers 119 that are rotatable axes 120 that are generally normal to the member 112 and generally parallel to the axis 118. The rollers 119 are mounted by means of pivot shafts 121 attached to the member 112 and provide the axes 120.

The upper handle portion 110 includes a pair of elongated members in the form of tubular rods 122 that are generally parallel, co-extensive and transversely spaced. The rods 112 pass between the rollers 119 and flanges 114 to be guided by the rollers 199. More particularly, the upper handle portion 110 is movable along a linear path in the direction of the arrow 123.

Extending between the rods 122 is a transverse bracket 124, to which springs 125 are attached. The springs 125 are also attached to the member 112 so that the springs urge the upper handle portion 110 to a predetermined location.

The rods 122 extend to a transverse rod 126 that is gripped by a user of the mower 100 to direct the mower 100. Typically, the mower 100 if not self propelled and would be pushed by the user applying a force to the rod 126.

The transverse member 115 as mentioned previously is attached to the pivot assemblies 109. Each pivot assembly 109 is attached to the handle mounting 105. More particularly each pivot assembly 109 includes a base 127 in the form of a plate attached to the handle mounting 105 by fasteners 128 and 139. Pivotally attached to the base 127 is a pivot member 129 by means of the fastener 139. The fasteners 139 (pivot shafts) are transversely aligned so as to provide a pivot axis 131 extending transverse of the mower 100 about which the handle assembly 104 can within limits pivot. The axis 131 is generally normal to the arrow 123.

An abutment member 130 attached to the member 129 is located in a recess 140 if the base 127 to limit angular movement of the member 129 about the axis 131.

Extending between the base 127 and pivot member 129 of each pivot assembly 109 are springs 132 that urge the associated pivot member 129 to a predetermined position so that the handle assembly 104 extends upwardly at a desired acute angle to the horizontal.

The handle mounting 105 is of tubular construction and includes a pair of straight portions 133 to which the bases 127 are attached. The portions 133 are joined by a transverse portion 134, with the fuel tank 135 being attached to the portions 134 and 135.

The above described preferred embodiment has the advantage of inhibiting the transmission of vibrations of the base 101 being delivered to a user of the mower 100 via the upper handle portion 110. The resilient pivot assemblies 109 absorb vibrations about the axis 131, the resilient assembly 136 that includes the springs 125 absorbs vibrations in the direction of the arrow 123, while the resilient pad 117 absorbs vibrations about the axis 118.

The axis 118 is generally normal to the direction of the arrow 123 while the axis 131 is normal both to the axis 118 and direction 123.

## Claims

1. A handle assembly (14) to be gripped and used by an operator to direct an implement (10) to move over a ground surface in a predetermined direction, the implement (10) having a base (11) upon which there is mounted an engine (13), said assembly (14) including:
a lower handle portion (20) to be attached to the base (11);
an upper handle portion (22) movably attached to the lower handle portion (20) and extending upwardly therefrom at a predetermined acute angle relative to the horizontal;
guides (49, 50) operatively associated with the lower handle portion (20) and upper handle portion (22) to restrain the upper handle portion (22) to move relative to the lower handle portion (20) along a generally linear path extending at said angle;
**characterised in that** said handle assembly further includes:
a resilient part (51) urging said upper handle portion (22) to a predetermined position relative to said lower handle portion (20) and inhibiting the transmission of vibrations from said lower handle portion (20) to said upper handle portion (22).

2. The handle assembly (14) of claim 1, wherein said guides (49, 50) include a slide assembly (23) providing a pair of telescopically associated guide rails (49, 50) being attached to the lower handle portion (20) and upper handle portion (22) to provide for movement of the upper handle portion (22) relative to the lower handle portion (20) along said generally linear path.

3. The assembly (14) of claim 1 or 2, wherein said resilient part (51) is at least one spring (51).

4. The assembly (14) of claim 1, wherein said resilient part (51) includes two springs (51), the two springs (51) being attached to the upper handle portion (22) and lower handle portion (20) to urge the upper handle portion (22) to said predetermined position and to inhibit said transmissions, with the springs (51) acting in opposite directions.

5. A handle assembly (14) of any one of claims 1 to 4 further including a pivot assembly (21) attached to the upper handle portion (22) to provide for pivoting movement of the upper handle portion (22) about a pivot axis (38) transverse relative to the upper handle portion (22), said axis (38) also being generally parallel to said ground surface, said pivot assembly (21) including a resilient part (32) urging said upper handle portion (22) to a predetermined angular position with respect to said axis (38) and to inhibit the transmission of vibration to the upper handle portion (22).

6. The assembly (14) of claim 5, wherein said pivot assembly (21) is also attached to the lower handle portion (20).

7. The handle assembly (14) of claim 1, wherein said guides are a guide assembly (95) attaching the upper handle portion (76) to the lower handle portion (71)..

8. The handle assembly (14) of claim 7, further including a pivot assembly (21) attached to the lower handle portion (72) for attachment to the lower handle portion (72) to the base (11) to provide for pivoting movement of the upper handle portion (22) about a pivot axis (38) transverse relative to the upper handle portion (22), said axis (38) also being generally parallel to the ground surface, said pivot assembly (21) including a resilient part (32) urging said lower handle portion (20) to a predetermined angular position with respect to said axis (38) and to inhibit vibration of the base (11) being transmitted to the upper handle portion (22).

9. The handle assembly (14) of claim 8, wherein said guide assembly (95) includes a plurality of rollers (78) directing the upper handle portion (76) to move along said path.

10. The handle assembly (14) of claim 9, further including a plate (79) attached to the lower handle portion (72) and upon which the rollers (78) are mounted.

11. The handle assembly (14) of claim 10, wherein said upper handle portion (76) slidably engages said plate and is engaged by said rollers to be directed along said path.

12. The handle assembly (14) of any one of claims 7 to 10, further including resilient pads attaching the guide assembly (95) to the lower handle portion (72) to absorb lateral vibration from the base (11) to the upper handle portion (76).

13. The handle assembly (104) of claim 1, further including a handle mounting (105) to be attached to the base (101), and a pivot assembly (109) attaching the lower handle portion (108) to the mounting (101) for pivoting movement about an axis (131) generally transverse relative to the upper handle portion (110), the pivot assembly (109) including a resilient part (132) urging the upper handle portion (110) to a predetermined angular position with respect to said axis (131) urging the upper handle portion (110) to a predetermined angular position with respect to said axis (131) and to inhibit vibration of the base (101) being transmitted to the upper handle portion (110).

14. The handle assembly (104) of claim 13, wherein the lower handle portion (108) is attached to the pivot assembly for angular movement about a further pivot axis (118), said further pivot axis being generally normal to the pivot axis of said pivot assembly said part.

15. The handle assembly (104) of claim 14, further including a resilient pad (117) limiting movement of the upper handle portion (110) about said further axis (118).

16. The handle assembly (14) of claim 15, further including a transverse member (115) attached to the lower handle portion (108) and attaching the lower handle portion (108) to said pivot assembly (109).

17. A lawn mower having said base and engine, and handle assembly of any one of claims 1 to 16.

## Patentansprüche

1. Griffsystem (14) zum Greifen und Benutzen durch einen Bediener zum Lenken eines Geräts (10), damit es sich in einer vorbestimmten Richtung über eine Bodenfläche bewegt, wobei das Gerät (10) ein Grundgestell (11) hat, auf das ein Motor (13) montiert ist, wobei das System (14) Folgendes enthält:
ein unteres Griffteil (20), das an das Grundgestell (11) zu befestigen ist;
ein oberes Griffteil (22), das an das untere Griffteil (20) beweglich befestigt ist und sich von dort unter einem vorbestimmten, relativ zur Horizontalen spitzen Winkel nach oben erstreckt;
Führungen (49, 50), die betriebsmäßig mit dem unteren Griffteil (20) und dem oberen Griffteil (22) assoziiert sind, um die Bewegung des oberen Griffteils (22) so einzuschränken, dass es sich relativ zum unteren Griffteil (20) entlang einem im Allgemeinen linearen Pfad bewegt, der sich unter diesem Winkel erstreckt;
**dadurch gekennzeichnet, dass** das Griffsystem außerdem enthält:
ein Federteil (51), das das obere Griffteil (22) relativ zum unteren Griffteil (20) in eine vorbestimmte Position bringt und die Übertragung von Schwingungen vom unteren Griffteil (20) auf das obere Griffteil (22) inhibiert.

2. Griffsystem (14) nach Anspruch 1, worin die Führungen (49, 50) ein Gleitsystem (23) enthalten, das ein Paar teleskopisch assoziierte Führungsschienen (49, 50) bereitstellt, die am unteren Griffteil (20) und am oberen Griffteil (22) befestigt sind, um Bewegung des oberen Griffteils (22) relativ zum unteren Griffteil (20) entlang dem im Allgemeinen linearen Pfad bereitzustellen.

3. System (14) nach Anspruch 1 oder 2, worin das Federteil (51) mindestens eine Feder (51) ist.

4. System (14) nach Anspruch 1, worin das Federteil (51) zwei Federn (51) enthält, wobei die zwei Federn (51) am oberen Griffteil (22) und am unteren Griffteil (20) befestigt sind, um das obere Griffteil (22) in die vorbestimmte Position zu bringen und die Übertragungen zu inhibieren, wobei die Federn (51) in entgegengesetzten Richtungen wirken.

5. Griffsystem (14) nach einem der Ansprüche 1 bis 4, außerdem eine Drehsystem (21) enthaltend, das am oberen Griffteil (22) befestigt ist, um Drehbewegung des oberen Griffteils (22) um eine transversal relativ zum oberen Griffteil (22) verlaufende Drehachse (38) zu ermöglichen, wobei die Achse (38) auch im Allgemeinen parallel zur Bodenfläche verläuft, wobei das Drehsystem (21) ein Federteil (32) enthält, das das obere Griffteil (22) relativ zur Achse (38) in eine vorbestimmte Winkelposition bringt und die Übertragung von Schwingungen auf das obere Griffteil (22) inhibiert.

6. System (14) nach Anspruch 5, worin das Drehsystem (21) auch am unteren Griffteil (20) befestigt ist.

7. Griffsystem (14) nach Anspruch 1, worin die Führungen ein Führungssystem (95) bilden, das das obere Griffteil (76) am unteren Griffteil (71) befestigt.

8. Griffsystem (14) nach Anspruch 7, außerdem ein Drehsystem (21) enthaltend, das am unteren Griffteil (72) befestigt ist zur Befestigung am unteren Griffteil (72) an das Grundgestell (11), um Drehbewegung des oberen Griffteils (22) um eine transversal relativ zum oberen Griffteil (22) verlaufende Drehachse (38) zu ermöglichen, wobei die Achse (38) auch im Allgemeinen parallel zur Bodenfläche verläuft, wobei das Drehsystem (21) ein Federteil (32) enthält, das das untere Griffteil (20) relativ zur Achse (38) in eine vorbestimmte Winkelposition bringt und die Übertragung von Schwingungen des Grundgestells (11) auf das obere Griffteil (22) inhibiert.

9. Griffsystem (14) nach Anspruch 8, worin das Führungssystem (95) eine Vielzahl von Rollen (78) enthält, die das obere Griffteil (76) so lenken, dass es sich den Pfad entlang bewegt.

10. Griffsystem (14) nach Anspruch 9, außerdem eine Platte (79) enthaltend, die am unteren Griffteil (72) befestigt ist und auf die die Rollen (78) montiert sind.

11. Griffsystem (14) nach Anspruch 10, worin das obere Griffteil (76) die Platte gleitmäßig in Eingriff bringt und von den Rollen in Eingriff gebracht wird, um den Pfad entlang gelenkt zu werden.

12. Griffsystem (14) nach einem der Ansprüche 7 bis 10, außerdem federnde Blöcke enthaltend, die das Führungssystem (95) am unteren Griffteil (72) befestigen, um seitliche Schwingungen vom Grundgestell (11) zum oberen Griffteil (76) zu absorbieren.

13. Griffsystem (104) nach Anspruch 1, außerdem eine Griffhalterung (105) enthaltend, die am Grundgestell (101) zu befestigen ist, und ein Drehsystem (109), das das untere Griffteil (108) an der Halterung (105) befestigt zur Drehbewegung um eine im Allgemeinen transversal relativ zum oberen Griffteil (110) verlaufenden Achse (131), wobei das Drehsystem (109) ein Federteil (132) enthält, das das obere Griffteil (110) relativ zur Achse (131) in eine vorbestimmte Winkelposition bringt und die Übertragung von Schwingungen des Grundgestells (101) auf das obere Griffteil (110) inhibiert.

14. Griffsystem (104) nach Anspruch 13, worin das untere Griffteil (108) an das Drehsystem befestigt ist zwecks Drehbewegung um eine weitere Drehachse (118), wobei die weitere Drehachse im Allgemeinen senkrecht zur Drehachse des Drehsystemteils verläuft.

15. Griffsystem (104) nach Anspruch 14, außerdem einen federnden Block (117) enthaltend, der die Bewegung des oberen Griffteils (110) um die weitere Achse (118) begrenzt.

16. Griffsystem (14) nach Anspruch 15, außerdem ein Transversalglied (115) enthaltend, das am unteren Griffteil (108) befestigt ist und das untere Griffteil (108) an das Drehsystem (109) befestigt.

17. Rasenmäher mit dem Grundgestell und dem Motor sowie dem Griffsystem nach einem der Ansprüche 1 bis 16.

## Revendications

1. Ensemble de poignée (14) destiné à être saisi et utilisé par un opérateur pour diriger un outil (10) destiné à être déplacé sur une surface de sol dans une direction prédéterminée, l'outil (10) ayant une base (11) sur laquelle on monte un moteur (13), ledit ensemble (14) comprenant :
une partie de poignée inférieure (20) destinée à être fixée sur la base (11) ;
une partie de poignée supérieure (22) fixée de manière mobile sur la partie de poignée inférieure (20) et s'étendant vers le haut à partir de celle-ci selon un angle aigu prédéterminé par rapport à l'horizontale ;
des guides (49, 50) associés de manière opérationnelle à la partie de poignée inférieure (20) et à la partie de poignée supérieure (22) pour limiter le mouvement de la partie de poignée supérieure (22) par rapport à la partie de poignée inférieure (20) le long d'une trajectoire généralement linéaire s'étendant au niveau dudit angle ;
**caractérisé en ce que** ledit ensemble de poignée comprend en outre :
une partie élastique (51) poussant ladite partie de poignée supérieure (22) dans une position prédéterminée par rapport à ladite partie de poignée inférieure (20) et empêchant la transmission de vibrations de ladite poignée inférieure (20) à ladite poignée supérieure (22).

2. Ensemble de poignée (14) selon la revendication 1, dans lequel lesdits guides (49, 50) comprennent un ensemble de glissière (23) prévoyant une paire de rails de guidage (49, 50) télescopiquement associés, qui sont fixés sur la partie de poignée inférieure (20) et la partie de poignée supérieure (22) pour fournir le mouvement de la partie de poignée supérieure (22) par rapport à la partie de poignée inférieure (20) le long de ladite trajectoire généralement linéaire.

3. Ensemble de poignée (14) selon la revendication 1 ou 2, dans lequel ladite partie élastique (51) est au moins un ressort (51).

4. Ensemble (14) selon la revendication 1, dans lequel ladite partie élastique (51) comprend deux ressorts (51), les deux ressorts (51) étant fixés sur la partie de poignée supérieure (22) et la partie de poignée inférieure (20) pour pousser la partie de poignée supérieure (22) dans ladite position prédéterminée et pour empêcher lesdites transmissions, avec les ressorts (51) qui agissent dans des directions opposées.

5. Ensemble de poignée (14) selon l'une quelconque des revendications 1 à 4, comprenant en outre un ensemble de pivot (21) fixé sur la partie de poignée supérieure (22) pour fournir le mouvement pivotant de la partie de poignée supérieure (22) autour d'un axe de pivot (38) transversal par rapport à la partie de poignée supérieure (22), ledit axe (38) étant généralement parallèle à ladite surface de sol, ledit ensemble de pivot (21) comprenant une partie élastique (32) poussant ladite partie de poignée supérieure (22) dans une position angulaire prédéterminée par rapport audit axe (38) et pour empêcher la transmission de vibrations à la partie de poignée supérieure (22).

6. Ensemble (14) selon la revendication 5, dans lequel ledit ensemble de pivot (21) est également fixé sur la partie de poignée inférieure (20).

7. Ensemble de poignée (14) selon la revendication 1, dans lequel lesdits guides sont un ensemble de guide (95) fixant la partie de poignée supérieure (76) à la partie de poignée inférieure (71).

8. Ensemble de poignée (14) selon la revendication 7, comprenant en outre un ensemble de pivot (21) fixé sur la partie de poignée inférieure (72) pour fixer la partie de poignée inférieure (72) à la base (11) afin de fournir le mouvement pivotant de la partie de poignée supérieure (22) autour d'un axe de pivot (38) transversal par rapport à la partie de poignée supérieure (22), ledit axe (38) étant également généralement parallèle à la surface du sol, ledit ensemble de pivot (21) comprenant une partie élastique (32) poussant ladite partie de poignée inférieure (20) dans une position angulaire prédéterminée par rapport audit axe (38) et pour empêcher la transmission de la vibration de la base (11) à la partie de poignée supérieure (22).

9. Ensemble de poignée (14) selon la revendication 8, dans lequel ledit ensemble de guide (95) comprend une pluralité de rouleaux (78) dirigeant la partie de poignée supérieure (76) pour se déplacer le long de ladite trajectoire.

10. Ensemble de poignée (14) selon la revendication 9, comprenant en outre une plaque (79) fixée sur la partie de poignée inférieure (72) et sur laquelle les rouleaux (78) sont montés.

11. Ensemble de poignée (14) selon la revendication 10, dans lequel ladite partie de poignée supérieure (76) met en prise de manière coulissante ladite plaque et est mise en prise par lesdits rouleaux pour être dirigée le long de ladite trajectoire.

12. Ensemble de poignée (14) selon l'une quelconque des revendications 7 à 10, comprenant en outre des patins élastiques fixant l'ensemble de guide (95) à la partie de poignée inférieure (72) afin d'absorber les vibrations latérales de la base (11) à la partie de poignée supérieure (76).

13. Ensemble de poignée (104) selon la revendication 1, comprenant en outre une partie de montage de poignée (105) destinée à être fixée à la base (101), et un ensemble de pivot (109) fixant la partie de poignée inférieure (108) au dispositif de montage (105) pour le mouvement pivotant autour d'un axe (131) généralement transversal par rapport à ladite partie de poignée supérieure (110), l'ensemble de pivot (109) comprenant une partie élastique (132) poussant la partie de poignée supérieure (110) dans une position angulaire prédéterminée par rapport audit axe (131) poussant la partie de poignée supérieure (110) dans une position angulaire prédéterminée par rapport audit axe (131) et pour empêcher la transmission des vibrations de la base (101) à la partie de poignée supérieure (110).

14. Ensemble de poignée (104) selon la revendication 13, dans lequel la partie de poignée inférieure (108) est fixée sur l'ensemble de pivot pour le mouvement angulaire autour d'un autre axe de pivot (118), ledit axe de pivot supplémentaire étant généralement normal par rapport à l'axe de pivot de ladite partie dudit ensemble de pivot.

15. Ensemble de poignée (104) selon la revendication 14, comprenant en outre un patin élastique (117) limitant le mouvement de la partie de poignée supérieure (110) autour dudit axe supplémentaire (118).

16. Ensemble de poignée (14) selon la revendication 15, comprenant en outre un élément transversal (115) fixé sur la partie de poignée inférieure (108) et fixant la partie de poignée inférieure (108) sur ledit ensemble de pivot (109).

17. Tondeuse ayant ladite base et le moteur, et l'ensemble de poignée selon l'une quelconque des revendications 1 à 16.
